# EUROPEAN PATENT SPECIFICATION

(11) **EP 0 505 209 B1**
(45) Date of publication and mention of the grant of the patent: **01.10.1997**
(21) Application number: 92302445.9
(22) Date of filing: 20.03.1992
(51) Int. Cl.: B32B 27/32

(54) **Polybutene-1 resin laminate**
Verbundstoff aus Polybuten-1
Film stratifié de polybutène-1

(30) Priority: 20.03.1991 JP 56804/91
(43) Date of publication of application: 23.09.1992
(73) Proprietor: MITSUI PETROCHEMICAL INDUSTRIES, LTD., Tokyo 100 (JP); SHELL OIL COMPANY, Houston, Texas 77252-2463 (US)
(72) Inventor: Takana, Haruhiko, c/o MITSUI PETROCHEM. IND., LTD., Wagi-cho, Kuga-gun, Yamaguchi (JP); Nishimura, Akito, c/o MITSUI PETROCHEM. IND., LTD., Wagi-cho, Kuga-gun, Yamaguchi (JP)
(74) Representative: Cresswell, Thomas Anthony

(56) References cited:
- EP-A- 0 053 925
- EP-A- 0 198 091
- EP-A- 0 321 957
- GB-A- 1 582 186

## Description

This invention relates to a polybutene-1 resin laminate, and more particularly to a laminate having excellent transparency, stretchability, flexibility, slip property, heat sealability and self-adhesion, which may be stretched without undergoing generation of wrinkles and a decrease in its transparency and fastening ability. The laminate may be used as a stretchable film for packaging foods.

Fresh and cooked foods are displayed and put on sale as a commodity after so-called prepackaging to keep the food clean and free from dust deposition and contamination, as well as to maintain the freshness of the food. In the prepackaging of fresh or cooked food, the food is either directly stretch-packaged with a transparent food-packaging stretchable film, or stretch-packaged after placing the food on a plastic tray. The food-packaging stretchable film is stretched upon packaging in order to keep the item to be packaged under strictly sealed conditions. The food-packaging stretchable film is required to have a good transparency for visible packaging as well as an aesthetic, brilliant appearance for improving the commercial value of the item packaged within the film. The food-packaging stretchable film is also required to have excellent oxygen and water vapour permeability, and aroma-retaining properties in order to retain the freshness and aroma of the fresh or cooked food, as well as good food-preserving ability at low temperatures. Furthermore, the food-packaging stretchable film is required to have good stretchability and elasticity to endure stretch-packaging with an automatic packaging machine, as well as satisfactory self-adhesion to prevent the film from becoming peeled off when the package is left for a long period after the packaging. As mentioned above, a wide variety of properties are required for the food-packaging stretchable film.

Films comprising a soft polyvinyl chloride (PVC) have been mainly used for the food-packaging stretchable films which are required to have the properties mentioned above.

The soft vinyl chloride resins, however, are liable to suffer from problems such as migration of the plasticizing agent contained in the resin into the food, which may result in hygiene problems, and generation of hydrogen chloride gas upon incineration after disposal. Therefore, use of vinyl chloride film as a food-packaging stretchable film is nowadays being reconsidered, and development of a substitute for the polyvinyl chloride film is urgently required

Proposed substitutes for the soft vinyl chloride resin are laminates utilizing the properties of polybutene-1, which has a quite high molecular weight among the polyolefins and rubbery properties similar to those of polyvinyl chloride. Such laminates comprise an intermediate layer of polybutene-1 and surface layers of another polyolefin such as polyethylene or an ethylene-vinyl acetate copolymer. For example, food-packaging stretchable films comprising three layers, that is polyolefin/polybutene-1/polyolefin, ethylene-vinyl acetate copolymer/polybutene-1/ethylene-vinyl acetate copolymer, and polyolefin/polybutene-1/polyolefin are disclosed in JP-B-62(1987)-27981, JP-A-61(1986)-89040 and JP-A-1(1989)-166954, respectively.

In the above-described conventional laminates comprising at least three layers, the polybutene-1 used for the intermediate layer is either a homopolymer of butene-1 or a copolymer containing more than 85% by mole of butene-1, resulting in a high crystallinity. Therefore, upon stretch packaging of the laminate film, the polybutene-1 intermediate layer experiences an oriented-crystallization causing an irregular reflection of the light passing through the layer. This results in haze and a decrease in the transparency of the laminate. Also, the intermediate layer comprising a polybutene-1 homopolymer or a copolymer of a high butene-1 content has a poor compatibility with the polyolefin surface layers. As a consequence, upon stretching of the laminate film, the surface layers are separated from the intermediate layer at the boundaries therebetween, and the layers are unevenly stretched causing wrinkles, resulting in a poor appearance.

The present invention seeks to provide a laminate which is suitable for use as a food-packaging stretchable film, and which has excellent transparency, stretchability, flexibility, smoothness, heat sealability and self-adhesion, and which may be stretched without generation of wrinkles and a decrease in transparency and fastening ability.

The present invention therefore provides a laminate comprising an intermediate layer (a) comprising a butene-1-propylene copolymer (A) and optionally up to 40% by weight of another resin blended therewith, said copolymer (A) containing 15 to 40% by mole of propylene and having a melt flow rate of from 0.1 to 30 g/10 min.; and an upper surface layer (b1) and a lower surface layer (b2) disposed on both sides of said intermediate layer (a), said surface layers mainly comprising a polyolefin resin (B).

The butene-1-propylene copolymer, which is the main constituent of the intermediate layer in the laminate of the present invention, has a propylene content of 15 to 40% by mole, preferably 15 to 35% by mole, and most preferably 18 to 30% by mole.

The butene-1-propylene copolymer has a melt flow rate at 190°C of 0.1 to 30 g/10 min., and preferably 0.3 to 20 g/10 min.

The butene-1-propylene copolymer preferably has a ratio of weight average molecular weight [Mw] to number average molecular weight [Mn], Mw/Mn, of 2/1 to 8/1 for a suitable flowability, and for good processability and appearance of the resulting film. The ratio of the weight average molecular weight [Mw] to the number average molecular weight [Mn], Mw/Mn, may be determined as described below.
(a) Using standard polystyrenes (monodisperse polystyrene, manufactured by Toso K.K.) whose molecular weight is already known, a calibration curve demonstrating the molecular weight, M, in relation to elution volume, EV, is depicted by analyzing polystyrenes of various molecular weights by GPC (gel permeation chromatography) under the conditions shown below:
   Equipment: Model 150C manufactured by Water Inc.
   Column: TSKGMH-6.6 mm diam. x 600, manufactured by Toso K. K.
   Sample volume: 400 µl
   Temperature: 135°C
   Flow rate: 1 ml/min.
(b) Polymer sample whose molecular weight is to be measured are charged in a flask with a solvent, o-dichlorobenzene, to prepare a solution comprising 15 mg of polymer and 20 ml of solvent.

To the resulting solution is added a stabilizing agent, 2,6-di-t-butylcresol, to a concentration of 0.1% by weight.

The resulting solution is heated to 140°C for 1 hour, and agitated for another 1 hour to completely dissolve the polymer and the stabilizing agent in the solution.

The solution is then filtered at 135 to 140°C with a 0.5 µm filter.

The resulting filtrate is analyzed by GPC under the same measurement conditions as (a) above to measure the EV. The number average molecular weight [Mn]:$\text{[Mn] = ΣMiNi/ΣNi,}$ and the weight average molecular weight [Mw]:${\text{[Mw] = ΣMi}}^{\text{2}} \text{Ni/ΣMiNi,}$ are determined from the EV measured by referring to the calibration curve depicted in (a) to further calculate the ratio of the weight average molecular weight to the number average molecular weight, [Mw]/[Mn].

The butene-1-propylene copolymer may have a melting point, Tm, determined with a differential scanning calorimeter, of 50 to 110°C to impart an excellent heat resistance to the resulting film, and a crystallinity determined by X-ray diffraction of 5 to 50%, preferably 10 to 45%, to provide a highly stretchable, strong film with a high tear resistance.

The melting point, Tm, as mentioned above may be measured with a differential scanning calorimeter by elevating the temperature of a sheet, which is pressed to a thickness of 0.1 mm, and which has been aged for 10 days, from 0°C to 250°C at a temperature elevation rate of 10°C/min., and determining the temperature indicating the maximum endothermic peak.

The crystallinity is determined by subjecting a sheet pressed to a thickness of 1.5 mm which has been aged for 10 days to X-ray diffraction.

The butene-1-propylene copolymer (A) may optionally have another resin blended therewith to a proportion of up to 40% by weight in order to adjust the stretchability, flexibility or tear strength and to improve press processability. Such resins which may be blended with the butene-1-propylene copolymer include a propylene resin containing at least 70% by mole of propylene, an ethylene resin containing at least 60% by mole of ethylene, and a butene-1 resin containing at least 85% by mole of butene-1. Examples of such a propylene resin include propylene homopolymer, propylene-ethylene copolymers, propylene-butene-1 copolymers, and propylene-ethylene-butene-1 terpolymers. Examples of such an ethylene resin include high-density polyethylenes, linear low-density polyethylenes, high-pressure low-density polyethylenes, ethylene-vinyl acetate copolymers, ethylene-unsaturated fatty acid copolymers, ethylene-α-olefin copolymers, ionomer resins produced by crosslinking an ethylene-methacrylic acid copolymer with a metal ion such as a zinc ion or sodium ion. Examples of the butene-1 resin include butene-1 homopolymer and butene-1-α-olefin copolymers.

The intermediate layer (a) typically has a thickness of 1 to 15 µm to provide a well-balanced strength and stretchability to the resulting laminate, and preferably a thickness of 2 to 10 µm for good processability and adaptability to automatic packaging.

The upper surface layer (b1) and the lower surface layer (b2) disposed on both sides of the intermediate layer (a) mainly comprise a polyolefin resin (B).

The polyolefin resin (B) typically comprises a homopolymer of an α-olefin containing 2 to 20 carbon atoms, a copolymer of two or more α-olefins containing 2 to 20 carbon atoms, a copolymer of an α-olefin containing 2 to 20 carbon atoms and a monomer copolymerizable therewith, or a crosslinked polymer of such a homopolymer or copolymer. The polyolefin resin (B) preferably has a molecular structure similar to that of the polybutene-1 to improve the adhesion between the intermediate layer (a) and the surface layers (b1) and (b2).

Examples of monomers which are copolymerizable with such an α-olefin include (meth)acrylic acid, methyl (meth)acrylate, ethyl (meth)acrylate, and vinyl acetate.

Examples of the polyolefin resin (B) include a polypropylene, a polyethylene, an ethylene-vinyl acetate copolymer, an ethylene-acrylic acid copolymer, an ethylene-ethyl acrylate copolymer, an ethylene-methacrylic acid copolymer, a copolymer of ethylene with another α-olefin, and any one of the above mentioned polymers crosslinked with a metal ion. The copolymer of ethylene with another α-olefin may preferably contain 60 to 95% by mole of the ethylene. The polyolefin resin (B) may comprise either one, or two or more of the above mentioned resins. The polyolefin resin (B) may most preferably comprise a linear low-density polyethylene having a density of up to 0.920 g/cm³ or an ethylene-vinyl acetate copolymer containing 10 to 20% by weight of vinyl acetate for improved flexibility and self-adhesion.

The polyolefin resin (B) typically has a melt flow rate (MFR) of 0.1 to 30 g/10 min., and more preferably a melt flow rate of 0.3 to 20 g/10 min., for good press workability, and to provide a viscosity which is well-balanced with the viscosity of the butene-1-prolylene copolymer.

Furthermore, the polyolefin resin (B) preferably has a crystallinity, measured by X-ray diffraction, of 5 to 60% to provide a well-balanced stiffness and strength to the resulting laminate. The measurement of the crystallinity may be carried out by the same manner as the measurement of the crystallinity of the butene-propylene copolymer described above.

The polyolefin resin (B) may optionally comprise a surfactant such as a fatty ester of a fatty alcohol, and a polyalkylene ether polyol in order to impart adherability, or anti-fogging or antistatic properties. The polyolefin resin (B) typically contains 0.5 to 5% by weight of such a surfactant.

Each of the upper surface layer (b1) and the lower surface layer (b2), which primarily comprise the polyolefin resin (B), typically has a thickness of 1 to 15 µm, and preferably a thickness of 2 to 10 µm, for good processability of film production and adaptability to automatic packaging, and to provide a well-balanced strength, stretchability and processability to the resulting laminate.

The laminate of the present invention generally has a thickness of 5 to 30 µm, and preferably a thickness of 10 to 20 µm, for a good balance between the stretchability and the film strength upon stretch packaging, as well as improved processability.

The process for producing the laminate of the present invention is not limited. The laminate may be produced by any conventional method including production of the laminate comprising three layers without any post-treatment such as non-stretching film extrusion, for example by a co-extrusion blown film process and co-extrusion cast film process, and lamination by extrusion-coating; and production of a stretched film by stretching the laminate film either monoaxially or biaxially under heating subsequent to the production of the laminate film. The non-stretching co-extrusion blown film process is the most preferred in view of the simple production equipment required and the excellent balance between the physical properties in the machine and transverse directions of the resulting laminate.

The laminate is quite suitable for use as a food-packaging stretchable film or protect film since the laminate is capable of uniformly stretching while maintaining the shrinkability, and since the laminate has an adequate adherability.

The present invention is further described in the following Examples and Comparative Examples.

### Example 1

A polybutene-1 resin laminate film was produced by a co-extrusion blown film process. A 4 µm-thick film of a butene-1-propylene copolymer having a propylene content of 20% by mole and a melt flow rate at 190°C of 4.0 was used as an intermediate layer. On both sides of the intermediate layer were laminated, as an upper surface layer and a lower surface layer, 4 µm-thick films of an ethylene-vinyl acetate copolymer having a vinyl acetate content of 15% by mole and a melt flow rate at 190°C of 2.0.

The resulting laminate film was measured for haze at the unstretched and 30%-stretched states as described below. The laminate film was also evaluated for its packaging ability by packaging two articles each having a height of 10 cm placed on a tray of foamed polystyrene using an automatic stretch packaging machine, AW-2600Jr manufactured by Teraoka Seiko K.K., and observing the stretchability and appearance of the film after the packaging as described below. The butene-1-propylene copolymer used for the intermediate layer was measured for its ratio of weight average molecular weight to number average molecular weight, Mw/Mn, melting point, and crystallinity as described above. The results are shown in Table 1.

### Haze value:

The haze value of the film was measured at the unstretched and 30%-stretched states to examine the degree of haze caused by stretching the film. The film was stretched to such a degree since the degree of stretching may vary in accordance with size and shape of the article packaged, and the film is sometimes partly stretched to a degree as high as 30% or even higher.

### Stretchability:

The film was observed to determine whether it had been evenly and smoothly stretched upon packaging with the automatic stretch packaging machine.

### Appearance:

The film was checked for the presence of wrinkles and tear after the packaging with the automatic stretch packaging machine.

### Examples 2 to 6

The procedure of Example 1 was repeated to produce laminate films having the layer formations and thicknesses of the layers shown in Table 1. The butene-1-propylene copolymer constituting the intermediate layer had the propylene contents and the properties shown in Table 1. The resulting laminate films were measured for their haze value at the unstretched and 30%-stretched states. The laminate films were also evaluated for their packaging ability by observing the stretchability and the appearance of the film upon packaging. The butene-1-propylene copolymers used for the intermediate layer were measured for their ratio of weight average molecular weight to number average molecular weight, Mw/Mn, melting point, and crystallinity as described above. The results are shown in Table 1.

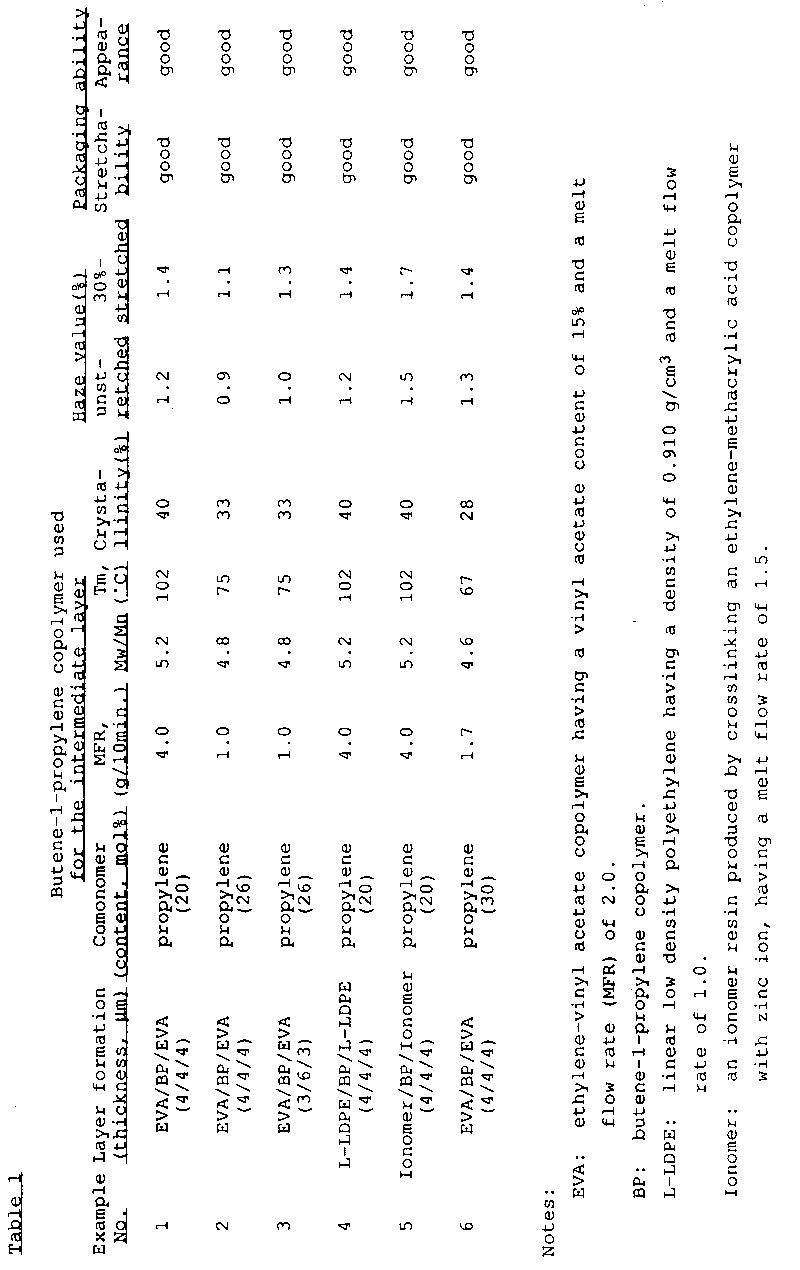

### Comparative Examples 1 to 6

The procedure of Example 1 was repeated to produce films having the layer formation and the thickness of the layers shown in Table 2. The polybutene-1 resin constituting the intermediate layer had the comonomer content and the property shown in Table 2. The resulting films were measured for their haze value at the unstretched and 30%-stretched states. The films were also evaluated for their packaging ability by observing the stretchability and the appearance of the films upon packaging. The polybutene-1 resins used for the intermediate layer were measured for their ratio of weight average molecular weight to number average molecular weight, Mw/Mn, melting point, and crystallinity as described above. The results are shown in Table 2.

### Comparative Example 7

A linear low-density polyethylene (L-LDPE) monolayer film having a density of 0.910 g/cm³ and a melt flow rate of 1.0 g/10min. was evaluated for its haze and packaging ability by repeating the procedure of Example 1. The linear low-density polyethylene was also measured for its ratio of weight average molecular weight to number average molecular weight, Mw/Mn, melting point, and crystallinity as described above. The results are shown in Table 2.

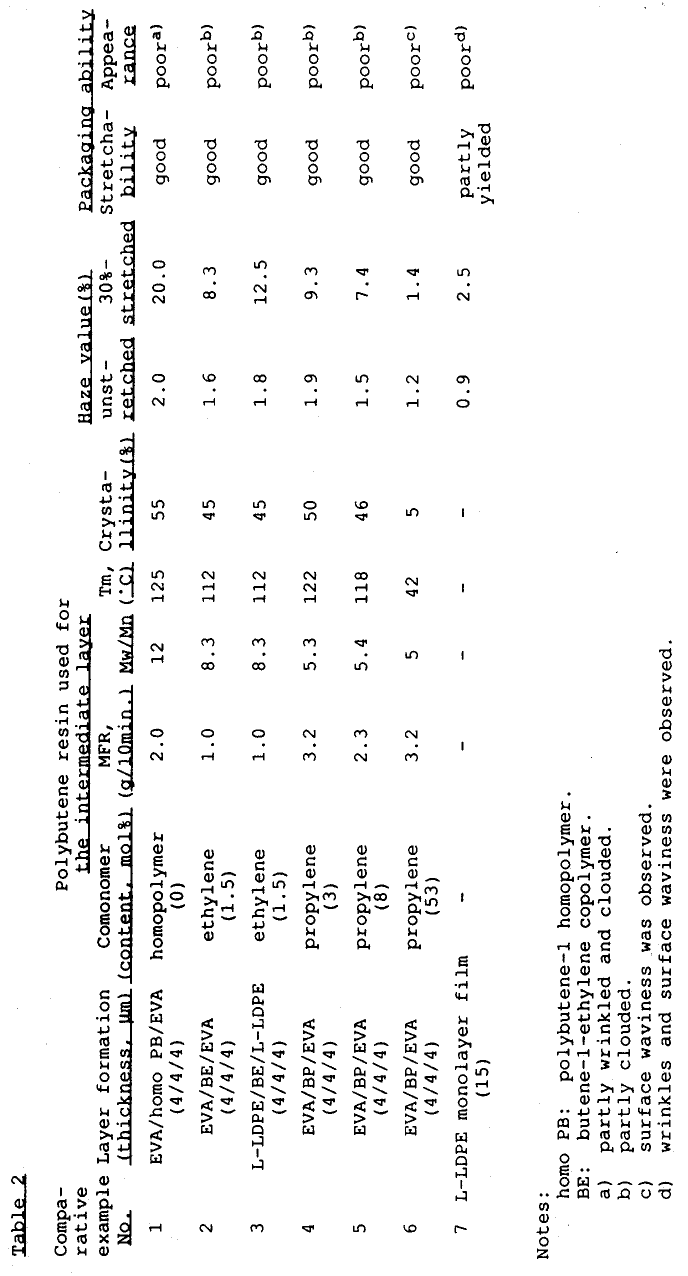

The laminate of the present invention has excellent transparency, stretchability, flexibility, slip property, heat sealability and self-adhesion. The laminate of the present invention can be stretched without undergoing a decrease in its transparency and fastening ability by generation of wrinkles. Therefore, the laminate is suitable for use as a food-packaging stretchable film.

## Claims

1. A laminate comprising an intermediate layer (a) comprising a butene-1-propylene copolymer (A) and optionally up to 40% by weight of another resin blended therewith, said copolymer (A) containing 15 to 40% by mole of propylene and having a melt flow rate at 190°C of from 0.1 to 30 g/10 min.; and an upper surface layer (b1) and a lower surface layer (b2) disposed on both sides of said intermediate layer (a), said surface layers (b1 and b2) mainly comprising a polyolefin resin (B).

2. A laminate according to claim 1, wherein the copolymer (A) has a ratio of weight average molecular weight [Mw] to number average molecular weight [Mn], Mw/Mn, of 2/1 to 8/1.

3. A laminate according to claim 1 or 2, wherein the copolymer (A) has a melting point of 50 to 110°C.

4. A laminate according to claim 1, 2 or 3, wherein the copolymer (A) has a crystallinity of 5 to 50%.

5. A laminate according to any one of the preceding claims wherein the intermediate layer (a) comprises a blend of copolymer (A) and another resin selected from a propylene resin, an ethylene resin and a butene-1 resin.

6. A laminate according to any one of the preceding claims wherein the intermediate layer (a) is 1 to 15 µm thick.

7. A laminate according to any one of the preceding claims wherein the polyolefin resin (B) comprises a resin selected from a homopolymer of an α-olefin containing 2 to 20 carbon atoms, a copolymer of two or more α-olefins containing 2 to 20 carbon atoms, a copolymer of an α-olefin of 2 to 20 carbon atoms and a monomer copolymerizable therewith, and a crosslinked polymer of such a homopolymer or copolymer.

8. A laminate according to claim 7, wherein the polyolefin resin (B) comprises a linear low-density polyethylene having a density of up to 0.920 g/cm³ or an ethylene-vinyl acetate copolymer containing 10 to 20% by weight of vinyl acetate.

9. A laminate according to any one of the preceding claims wherein the polyolefin resin (B) has a melt flow rate (MFR) of 0.1 to 30 g/10 min.

10. A polybutene-1 resin laminate according to any one of the preceding claims, wherein the polyolefin resin (B) has a crystallinity of 5 to 60%.

11. A polybutene-1 resin laminate according to any one of the preceding claims wherein each of the upper and lower surface layers (b1) and (b2) is 1 to 15 µm thick.

12. A laminate according to any one of the preceding claims wherein the laminate is 5 to 30 µm thick.

## Patentansprüche

1. Laminat, umfassend eine Zwischenschicht (a), umfassend ein Buten-1/Propylen-Copolymer (A) und gegebenenfalls bis zu 40 Gew.-% eines anderen Harzes, das mit dem Copolymer (A) vermischt ist, enthaltend 15 bis 40 Mol-% Propylen und mit einer Fließfähigkeit bei 190°C von 0,1 bis 30 g/10 min, und eine obere Schicht (b1) und eine untere Schicht (b2), die auf beiden Seiten der Zwischenschicht (a) angeordnet sind, wobei die Schichten (b1 und b2) hauptsächlich ein Polyolefinharz (B) umfassen.

2. Laminat nach Anspruch 1, wobei das Copolymer (A) ein Verhältnis von gewichtsmäßigem mittleren Molekulargewicht [Mw] zu zahlenmäßigem mittleren Molekulargewicht [Mn], Mw/Mn, von 2/1 bis 8/1 aufweist.

3. Laminat nach Anspruch 1 oder 2, wobei das Copolymer (A) einen Schmelzpunkt von 50 bis 110°C aufweist.

4. Laminat nach Anspruch 1, 2 oder 3, wobei das Copolymer (A) eine Kristallinität von 5 bis 50 % aufweist.

5. Laminat nach einem der vorangehenden Ansprüche, wobei die Zwischenschicht (a) ein Gemisch aus Copolymer (A) und einem anderen Harz, ausgewählt aus einem Propylenharz, einem Ethylenharz und einem Buten-1-Harz umfaßt.

6. Laminat nach einem der vorangehenden Ansprüche, wobei die Zwischenschicht (a) 1 bis 15 µm dick ist.

7. Laminat nach einem der vorangehenden Ansprüche, wobei das Polyolefinharz (B) ein Harz umfaßt, ausgewählt aus einem Homopolymer eines α-Olefins mit 2 bis 20 Kohlenstoffatomen, einem Copolymer aus zwei oder mehreren α-Olefinen mit 2 bis 20 Kohlenstoffatomen, einem Copolymer aus einem α-Olefin mit 2 bis 20 Kohlenstoffatomen und einem damit copolymerisierbaren Monomer und einem vernetzten Polymer aus einem solchen Homopolymer oder Copolymer.

8. Laminat nach Anspruch 7, wobei das Polyolefinharz (B) ein lineares Polyethylen niedriger Dichte mit einer Dichte von bis zu 0,920 g/cm³ oder ein Ethylen/Vinylacetat-Copolymer, enthaltend 10 bis 20 Gew.-% Vinylacetat, umfaßt.

9. Laminat nach einem der vorangehenden Ansprüche, wobei das Polyolefinharz (B) eine Fließfähigkeit (MFR) von 0,1 bis 30 g/10 min aufweist.

10. Polybuten-1-harz-Laminat nach einem der vorangehenden Ansprüche, wobei das Polyolefinharz (B) eine Kristallinität von 5 bis 60 % aufweist.

11. Polybuten-1-harz-Laminat nach einem der vorangehenden Ansprüche, wobei die obere und untere Schicht (b1) und (b2) jeweils 1 bis 15 µm dick sind.

12. Laminat nach einem der vorangehenden Ansprüche, wobei das Laminat 5 bis 30 µm dick ist.

## Revendications

1. Stratifié présentant une couche intermédiaire (a) comprenant un copolymère (A) de butène-1 et de propylène et éventuellement jusqu'à 40% en poids d'une autre résine, mélangée audit copolymère, ledit copolymère (A) contenant 15 à 40% en moles de propylène et ayant un indice de fluidité à l'état fondu à 190°C de 0,1 à 30 g/10 min, et une couche superficielle supérieure (b1) et une couche superficielle inférieure (b2) , disposées des deux côtés de ladite couche intermédiaire (a), lesdites couches superficielles (b1) et (b2) comprenant essentiellement une résine de polyoléfine (B).

2. Stratifié selon la revendication 1, pour lequel le copolymère (A) présente un rapport de la masse moléculaire moyenne en poids [Mp] à la masse moléculaire moyenne en nombre [Mn], Mp/Mn, de 2/1 à 8/1.

3. Stratifié selon la revendication 1 ou 2, pour lequel le copolymère (A) a un point de fusion de 50 à 110°C.

4. Stratifié selon l'une quelconque des revendications 1 à 3, pour lequel le copolymère (A) présente une cristallinité de 5 à 50%.

5. Stratifié selon l'une quelconque des revendications précédentes, dans lequel la couche intermédiaire (a) comprend un mélange de copolymère (A) et d'une autre résine choisie parmi une résine de propylène, une résine d'éthylène et une résine de butène-1.

6. Stratifié selon l'une quelconque des revendications précédentes, dans lequel la couche intermédiaire (a) a une épaisseur de 1 à 15 µm.

7. Stratifié selon l'une quelconque des revendications précédentes, dans lequel la résine de polyoléfine (B) comprend une résine choisie parmi les homopolymères d'α-oléfine contenant 2 à 20 atomes de carbone, les copolymères de deux ou plus de deux α-oléfines contenant 2 à 20 atomes de carbone, les copolymères d'une α-oléfine ayant 2 à 20 atomes de carbone et d'un monomère copolymérisable avec elle, et les polymères réticulés issus de tels homopolymères ou copolymères.

8. Stratifié selon la revendication 7, dans lequel la résine de polyoléfine (B) comprend un polyéthylène linéaire basse densité, ayant une densité atteignant au plus 0,920 g/cm³, ou un copolymère d'éthylène et d'acétate de vinyle, contenant 10 à 20% en poids d'acétate de vinyle.

9. Stratifié selon l'une quelconque des revendications précédentes, pour lequel la résine de polyoléfine (B) présente un indice de fluidité à l'état fondu (MFR) de 0,1 à 30 g/10 min.

10. Stratifié de résine de poly(butène-1) selon l'une quelconque des revendications précédentes, pour lequel la résine de polyoléfine (B) présente une cristallinité de 5 à 60%.

11. Stratifié de résine de poly(butène-1) selon l'une quelconque des revendications précédentes, dans lequel chacune des couches superficielles supérieure et inférieure (b1) et (b2) a une épaisseur de 1 à 15 µm.

12. Stratifié selon l'une quelconque des revendications précédentes, qui a une épaisseur de 5 à 30 µm.
